# EUROPÄISCHE PATENTANMELDUNG

(11) **EP 0 969 201 A2**
(43) Veröffentlichungstag der Anmeldung: **05.01.2000**
(21) Anmeldenummer: 99109845.0
(22) Anmeldetag: 19.05.1999
(51) Int. Cl.: F02M 37/14

(54) **Kraftstoff-Förderaggregat mit einer Kreiselpumpe und kraftstoffdurchströmtem Schalldämpfer**

(30) Priorität: 29.06.1998 DE 19828932
(71) Anmelder: ROBERT BOSCH GMBH, 70442 Stuttgart (DE)
(72) Erfinder: Frank, Kurt, 73614 Schorndorf (DE); Ruttkowski, Stephanie, 71640 Ludwigsburg (DE)

(57) **Zusammenfassung**

Zur wirksamen Unterdrückung des hochfrequenten Laufgeräusches einer Kraftstoffpumpe vom Kreiselpumpentyp, die wenigstens ein Laufrad mit einer Mehrzahl von Schaufeln aufweist, ist bei einem Kraftstoff-Förderaggregat mit einer solchen Kraftstoffpumpe ein Schalldämpfer vorgesehen, der von dem Kraftstoff vor seinem Eintritt in die Kraftstoffpumpe durchströmt wird.

## Beschreibung

### Stand der Technik

Die vorliegende Erfindung betrifft ein Kraftstoff-Förderaggregat, insbesondere für die Kraftstoffversorgung einer Brennkraftmaschine eines Kraftfahrzeugs. Bislang sind in derartigen Förderaggregaten hauptsächlich volumetrische Pumpen, wie etwa Zahnradpumpen, eingesetzt worden. Diese Pumpen arbeiten bei einer Umdrehungsfrequenz von einigen 10 Hertz und erzeugen ein Geräuschspektrum, das durch die Umdrehungsfrequenz und einige niedrige Harmonische davon dominiert ist. Dieses Geräusch läßt sich mit Hilfe einer schwingungsgedämpften Aufhängung der Förderpumpe ohne Schwierigkeiten soweit dämpfen, daß es neben dem Laufgeräusch der gleichzeitig betriebenen Brennkraftmaschine kaum mehr herauszuhören ist.

Die Herstellungskosten für ein Kraftstoff-Förderaggregat können verringert werden und seine Zuverlässigkeit gesteigert werden, wenn anstelle der volumetrischen Pumpe eine Kreiselpumpe verwendet werden könnte, d.h. eine Pumpe, bei der die Pumpwirkung auf durch wenigstens ein rotierendes Laufrad auf das zu pumpende Fluid ausgeübter Beschleunigung beruht.

Kreiselpumpen haben, durch ihre Bauart bedingt, ein anderes Geräuschspektrum als volumetrische Pumpen. Eine Kreiselpumpe zum Einsatz in einem Kraftstoff-Förderaggregat muß kompakt sein, infolgedessen muß der Durchmesser des Laufrads klein sein. Um dennoch ausreichende Pumpwirkung zu erzielen, muß das Laufrad mit hoher Geschwindigkeit rotieren und an seinem Umfang eine große Zahl von Schaufeln, oft 40 bis 80 Stück, tragen, die das zu pumpende Fluid in Bewegung versetzen. Das Laufgeräusch dieser Pumpen hat daher nicht nur einen Anteil bei der Rotationsfrequenz des Laufrades und einigen niedrigen Harmonischen davon, sondern zusätzlich einen Anteil bei einer Frequenz, die dem Produkt aus Drehzahl und Schaufelzahl entspricht. Dieser letztere Anteil bildet einen Hochfrequenzpfeifton mit einer Frequenz bis zu 16 kHz, der von vielen Personen als unangenehm empfunden wird. Da ein solcher Frequenzanteil im Laufgeräusch einer von dem Förderaggregat versorgten Brennkraftmaschine nicht enthalten ist, ist er überdies auch bei geringer Intensität deutlich herauszuhören.

Dieser Nachteil der Kreiselpumpen hat bislang ihren Einsatz in Kraftstoff-Förderaggregaten, insbesondere für Kraftfahrzeuge, weitgehend verhindert.

Man hat versucht, das Pfeifgeräusch durch eine unterschiedliche Gestaltung der Schaufeln des Laufrades und eine unregelmäßige Anordnung der Schaufeln am Laufrad zu bekämpfen. Man erreicht hierdurch, daß das Spektrum des Pfeifgeräuschs breiter wird, das Geräusch somit einen Hochfrequenzrauschen ähnlicher wird und nicht mehr ganz so durchdringend ist. Hörbar bleibt das hochfrequente Geräusch dennoch.

Diese Lösung ist im Vergleich zu einer Kreiselpumpe mit regelmäßig geformtem Laufrad relativ kostspielig, da die Fertigung des unregelmäßig geformten Laufrades zwangsläufig aufwendiger ist und seine Auswuchtung erhöhte Sorgfalt erfordert.

### Vorteile der Erfindung

Das erfindungsgemäße Förderaggregat mit den Merkmalen des Anspruchs 1 hat demgegenüber den Vorteil, daß es den günstigen Preis und den einfachen Aufbau eines Förderaggregats mit Kreiselpumpe mit dem unaufdringlichen Betriebsgeräusch einer volumetrischen Pumpe verbindet.

Durch die in den weiteren Ansprüchen aufgeführten Maßnahmen sind vorteilhafte Weiterbildungen und Verbesserungen des im Anspruch 1 angegebenen Förderaggregats möglich.

Eine platzsparende Unterbringungsmöglichkeit für den Schalldämpfer ist in einer Vorkammer vor einem Einlaßanschluß der Kreiselpumpe, wobei eine Wand der Vorkammer wenigstens zum Teil durch einen Saugfilter gebildet ist, durch den zu fördernder Kraftstoff in die Vorkammer eintritt.

Dabei kann sich der Schalldämpfer zwischen dem Saugfilter und dem Einlaßanschluß über eine gesamte Querschnittsfläche der Vorkammer erstrecken.

Der Schalldämpfer kann auch in einem Gehäuse mit einem Auslaßstutzen untergebracht sein, der dicht an einem Einlaßanschluß der Kreiselpumpe befestigt, z.B. darin eingesteckt oder eingeschraubt, ist.

Weitere Merkmale und Vorteile ergeben sich aus der nachfolgenden Beschreibung.

### Zeichnung

Die Erfindung ist anhand von in der Zeichnung dargestellten Ausführungsbeispielen nachfolgend näher erläutert. Es zeigen:
- Fig. 1: ein erstes Ausführungsbeispiel des erfindungsgemäßen Kraftstoff-Förderaggregates;
- Fig. 2: ein zweites Ausführungsbeispiel des erfindungsgemäßen Kraftstoff-Förderaggregates;
- Fig. 3: eine perspektivische Ansicht eines Schalldämpfers zur Verwendung in einem erfindungsgemäßen Förderaggregat; und
- Fig. 4: einen Schalldämpfer im Querschnitt.

### Beschreibung von Ausführungsbeispielen

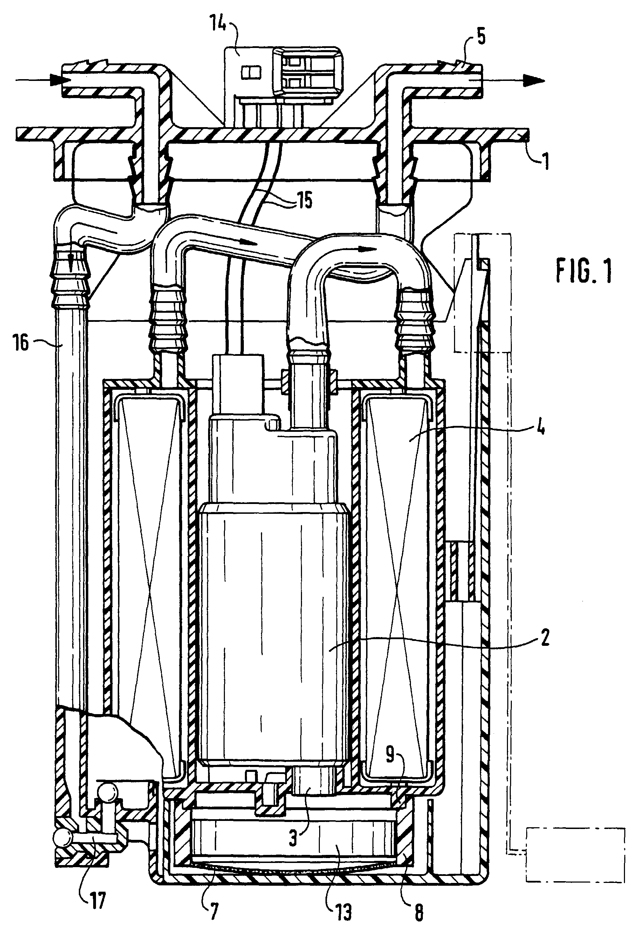

Fig. 1 zeigt ein erstes Ausführungsbeispiel des erfindungsgemäßen Kraftstoff-Förderaggregates im Längsschnitt, das vorgesehen ist, um in einen Kraftstofftank eines Fahrzeugs durch eine Öffnung in dessen Wand eingeführt und mit Hilfe eines Flansches 1 in dieser Öffnung befestigt zu werden.

Ein im wesentlichen zylindrisches Gehäuse 10 des Kraftstoff-Fördermoduls weist eine zylindrische innere Kammer 11 und eine die innere Kammer ringförmig umgebende äußere Kammer 12 auf. Eine elektrische Kraftstoffpumpe 2 vom Kreiselpumpentyp ist in der inneren Kammer 11 untergebracht. Ein Einlaßanschluß oder Ansaugstutzen 3 der Kraftstoffpumpe 2 erstreckt sich durch eine Öffnung am Boden der inneren Kammer 11. Die Pumpe 2 enthält in bekannter Weise einen Elektromotor, der ein Laufrad mit einer Drehgeschwindigkeit von ca. 6000 - 24000 U/min antreibt. Das Laufrad hat 40 - 80 identische, gleichmäßig auf seinen Umfang verteilte Schaufeln und einen Durchmesser von ca. 35 bis 50 mm hat. Der von der Kraftstoffpumpe 2 angesaugte und geförderte Kraftstoff durchläuft zunächst im Anschluß an die Kraftstoffpumpe 2 einen Filter 4 in der äußeren Kammer 12 und danach eine Versorgungsleitung 5 zu einem (nicht dargestellten) Verbrennungsmotor.

Unter dem Boden des Gehäuses 10 ist eine flach-zylinderförmige Vorkammer 6 angeordnet. Diese Kammer 6 ist gebildet durch eine ringförmige Seitenwand 8, die auf einem komplementären Vorsprung 9 am Boden des Gehäuses 10 aufgesteckt oder aufgeschraubt ist, und einer Bodenwand, die durch einen Saugfilter 7 aus einer dünnen Schicht eines steifen, durchlässigen Fasermaterials gebildet ist. Um dem Druck des in die Kraftstoffpumpe 2 durch den Saugfilter 7 strömenden Kraftstoffes besser standhalten zu können, ist der Saugfilter geringfügig nach unten vorgewölbt.

Ein Schalldämpfer 13 ist in der Vorkammer so angeordnet, daß er den gesamten Querschnitt des Einlaßanschlusses 3 verdeckt und so verhindert, daß ein durch den Kraftstoff übertragenes Laufgeräusch der Pumpe 2 auf geradem Wege aus dem Einlaßanschluß 3 austreten kann. Im gezeigten Beispiel erstreckt sich der Schalldämpfer 13 über den gesamten horizontalen Querschnitt der Vorkammer 6 und liegt dicht an der Seitenwand 8 an. Durch diese Anordnung kann auch reflektiertes Laufgeräusch nicht ungedämpft aus dem Ansaugstutzen 3 ins Freie gelangen.

Auf die innere Struktur des Schalldämpfers 13 wird an späterer Stelle eingegangen.

Die Kraftstoffpumpe 2 wird durch einen Steckverbinder 14 und durch den Flansch 1 hindurchgeführte elektrische Leitungen 15 mit Energie versorgt.

Von dem Verbrennungsmotor nicht verbrauchter Kraftstoff gelangt durch eine Rückführleitung 16 zu einer Strahlpumpe 17, die in der Nähe des Bodens des Tanks einer Öffnung 18 in der Wand eines Bechers 19 zugewandt angeordnet ist, der die Vorkammer 6 umgibt. Der von der Strahlpumpe 17 erzeugte Kraftstoffstrahl reißt Kraftstoff aus dem Tank durch die Öffnung 18 in den Becher 19 mit und sorgt so für einen im Vergleich zum Rest des Tanks erhöhten Kraftstoffspiegel in dem Becher 19.

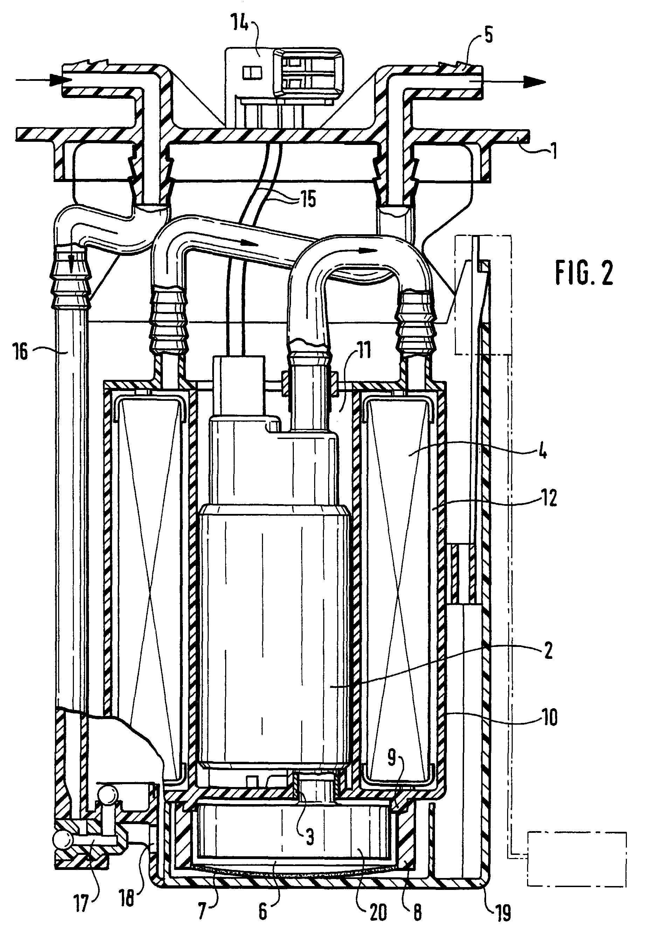

Fig. 2 zeigt ein zweites Ausführungsbeispiel des erfindungsgemäßen Kraftstoff-Förderaggregates. Teile, die denen des ersten Ausführungsbeispiels gleichen, haben dieselben Bezugszeichen und werden nicht erneut beschrieben. Der Schalldämpfer 20 bei dieser Ausgestaltung umfaßt ein festes Gehäuse mit einem Auslaßstutzen 21, der in den Ansaugstutzen 3 der Kraftstoffpumpe 2 dicht eingesteckt ist. Da bei dieser Ausgestaltung eine effiziente Dämpfung auch von reflektiertem Laufgeräusch sichergestellt ist, ohne daß der Schalldämpfer 20 an die Seitenwand 8 dicht anschließt, können Eintrittsöffnungen für den Kraftstoff nach Zweckmäßigkeitsgesichtspunkten weitgehend beliebig auf dem zylinderförmigen Gehäuse des Schalldämpfers 20, sogar auf dessen Oberseite, angeordnet sein.

Bei einer nicht dargestellten Variante dieser Ausgestaltung ist der Einlaßanschluß 3 der Kraftstoffpumpe 2 mit einem Innengewinde und der Auslaßstutzen 21 des Schalldämpfers mit einem dazu komplementären Außengewinde versehen, und Schalldämpfer 20 und Vorkammer 6 sind im Querschnitt so bemessen, daß der Schalldämpfer frei um die Achse seines Auslaßstutzens gedreht und in den Ansaugstutzen 3 eingeschraubt werden kann.

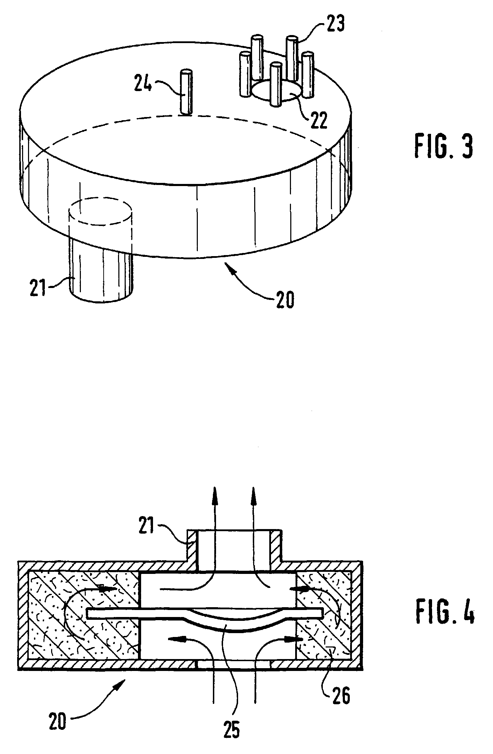

Fig. 3 zeigt eine perspektivische Ansicht einer weiteren Variante eines Schalldämpfers, der in einem erfindungsgemäßen Kraftstoff-Förderaggregat verwendbar ist. Der Schalldämpfer 20 ist schräg von unten gesehen gezeigt, mit vom Betrachter abgewandtem Auslaßstutzen 21. Die Einlaßöffnung ist auf der dem Betrachter zugewandten Seite des Körpers des Schalldämpfers angeordnet und ist von einer Mehrzahl von Vorsprüngen kranzförmig umgeben. Weitere Vorsprünge 24 können auf der Oberfläche des Schalldämpfers angeordnet sein. Aufgabe der Vorsprünge ist es, nach dem Einbau in die Vorkammer 6 den Saugfilter 7 von innen abzustützen und so zu verhindern, daß der Saugfilter 7 bei zu hohem Druck durch den hindurchströmenden Kraftstoff, etwa bei kurzzeitig erhöhtem Kraftstoffverbrauch oder bei fortgeschrittener Verschmutzung des Saugfilters, mit der Oberfläche des Schalldämpfers in Berührung kommt und dadurch die effektive Querschnittsfläche des Saugfilters 7 verringert wird.

Der Schalldämpfer kann im Innern unterschiedlich aufgebaut sein. Er kann vollständig aus einem porösen, schwingungsdämpfenden Material, z.B. einem offenporigen Schaummaterial, bestehen, das dem Kraftstoff geringen Strömungswiderstand entgegensetzt und das aus dem Einlaßanschluß 3 austretendes Laufgeräusch durch Dissipation der Schwingungen dämpft. Diese Möglichkeit kommt insbesondere bei dem in Fig. 1 gezeigten Kraftstoff-Förderaggregat in Betracht.

Eine andere Möglichkeit ist in Fig. 4 dargestellt. Der in dieser Figur im Querschnitt gezeigte Schalldämpfer enthält in einem Gehäuse einen flachen Reflektor, hier in Gestalt einer luftgefüllten Kammer 25, der an seinem gesamten äußeren Umfang in ein poröses, schwingungsdämpfendes Material 26 eingelassen ist. Das Material 26 erstreckt sich ringförmig um den gesamten äußeren Umfang der Kammer 25. Durch die untere Einlaßöffnung 22 eintretender Kraftstoff wird an der Kammer 25 seitlich abgelenkt, durchströmt das poröse Material 26 und tritt durch den Auslaßstutzen 21 in die Kraftstoffpumpe ein. Von der Kraftstoffpumpe durch den Auslaßstutzen 21 kommendes Laufgeräusch wird an dem Reflektor 25 größtenteils in die Pumpe zurückreflektiert. Weitere Dämpfung erfolgt in dem Material 26.

## Patentansprüche

1. Kraftstoff-Förderaggregat mit einer als Kreiselpumpe ausgebildeten Kraftstoffpumpe (2), welche wenigstens ein Laufrad mit einer Mehrzahl von Schaufeln aufweist, zum Fördern von Kraftstoff aus einem Vorrat,
dadurch gekennzeichnet, daß
ein kraftstoff-durchströmter Schalldämpfer (13, 20) stromauf von einem Kraftstoff-Einlaßanschluß (3) der Kraftstoffpumpe angeordnet ist.

2. Kraftstoff-Förderaggregat nach Anspruch 1, dadurch gekennzeichnet, daß der Schalldämpfer (20) ein von dem Kraftstoff durchströmtes Gehäuse mit einem Auslaßstutzen (21) umfaßt, der dicht an dem Einlaßanschluß (3) der Kraftstoffpumpe (2) angeschlossen ist.

3. Kraftstoff-Förderaggregat nach Anspruch 1 oder 2, dadurch gekennzeichnet, daß der Schalldämpfer (13, 20) in einer Vorkammer (6) vor dem Einlaßanschluß (3) der Kraftstoffpumpe (2) untergebracht ist, wobei eine Wand der Vorkammer (6) wenigstens zum Teil durch einen Saugfilter (7) gebildet ist, durch zu fördernder Kraftstoff in die Vorkammer (6) eintritt.

4. Kraftstoff-Förderaggregat nach Anspruch 3, dadurch gekennzeichnet, daß der Schalldämpfer (13) sich zwischen dem Saugfilter (7) und dem Einlaßanschluß (3) über eine gesamte Querschnittsfläche der Vorkammer (6) erstreckt.

5. Kraftstoff-Förderaggregat nach Anspruch 3 oder 4, dadurch gekennzeichnet, daß der Schalldämpfer an einer dem Saugfilter (7) zugewandten Seite Abstandshalter-Vorsprünge (23, 24) trägt.

6. Kraftstoff-Förderaggregat nach einem der vorhergehenden Ansprüche, dadurch gekennzeichnet, daß der Schalldämpfer einen Absorptions-Schalldämpferabschnitt (26) umfaßt.

7. Kraftstoff-Förderaggregat nach einem der vorhergehenden Ansprüche, dadurch gekennzeichnet, daß der Schalldämpfer einen Reflektor (25) umfaßt.
